# FASCICULE DE BREVET EUROPEEN

(11) **EP 2 943 436 B1**
(45) Date de publication et mention de la délivrance du brevet: **21.11.2018**
(21) Numéro de dépôt: 14703116.5
(22) Date de dépôt: 09.01.2014
(51) Int. Cl.: C01B 3/32

(54) **PROCÉDÉ DE PRODUCTION D'HYDROGENE**
VERFAHREN ZUR HERSTELLUNG VON WASSERSTOFF
METHOD FOR PRODUCING HYDROGEN

(30) Priorité: 10.01.2013 FR 1350218
(43) Date de publication de la demande: 18.11.2015
(73) Titulaire: Centre National de la Recherche Scientifique (C.N.R.S.), 75016 Paris (FR); Université Lille 1 - Sciences Et Technologies, 59655 Villeneuve D'ascq Cedex (FR)
(72) Inventeur: DUHAMEL, Louise, F-59650 Villeneuve d'Ascq (FR); FANG, Wenhao, F-59650 Villeneuve d'Ascq (FR); PAUL, Sébastien, F-59158 Thun St Amand (FR); DUMEIGNIL, Franck, F-59273 Fretin (FR)
(74) Mandataire: Lavoix
(86) Numéro de dépôt international: PCT/FR2014/050025
(87) Numéro de publication internationale: WO 2014/108636

(56) Documents cités:
- WO-A1-2004/041724
- FR-A1- 2 876 996
- CYRIL PIREZ ET AL: "Highly Efficient and Stable CeNiHZOY Nano-Oxyhydride Catalyst for H2 Production from Ethanol at Room Temperature", ANGEWANDTE CHEMIE INTERNATIONAL EDITION, vol. 50, no. 43, 17 octobre 2011 (2011-10-17), pages 10193-10197, XP055077417, ISSN: 1433-7851, DOI: 10.1002/anie.201102617 cité dans la demande
- JALOWIECKI-DUHAMEL L ET AL: "Hydrogen production from ethanol steam reforming over cerium and nickel based oxyhydrides", INTERNATIONAL JOURNAL OF HYDROGEN ENERGY, ELSEVIER SCIENCE PUBLISHERS B.V., BARKING, GB, vol. 35, no. 23, 1 décembre 2010 (2010-12-01), pages 12741-12750, XP027459196, ISSN: 0360-3199, DOI: 10.1016/J.IJHYDENE.2009.08.080 [extrait le 2009-09-26]
- WENHAO FANG ET AL: "Ce-Ni mixed oxide as efficient catalyst for H2 production and nanofibrous carbon material from ethanol in the presence of water", RSC ADVANCES, vol. 2, no. 25, 1 janvier 2012 (2012-01-01), page 9626, XP055077631, ISSN: 2046-2069, DOI: 10.1039/c2ra21701e

## Description

La présente invention est relative à un procédé de production d'hydrogène à basse température à partir d'alcools sans formation de carbone mettant en oeuvre un matériau oxyhydrure à base de cérium et de nickel et à l'utilisation d'un tel matériau à titre de catalyseur pour la transformation d'alcools en hydrogène.

Le gaz dihydrogène H₂, plus communément appelé « hydrogène », peut être utilisé dans diverses applications en raison de son fort potentiel énergétique. N'existant pas à l'état naturel, il doit être fabriqué à partir d'une source d'énergie primaire, puis transporté, stocké et distribué vers l'utilisateur.

L'hydrogène est aujourd'hui proposé comme source d'énergie et peut être converti en électricité, en chaleur ou en force motrice selon l'usage final. L'hydrogène peut en particulier être utilisé pour alimenter des piles à combustible qui constituent alors des convertisseurs électrochimiques qui produisent électricité et chaleur par oxydation d'un combustible gazeux qui est l'hydrogène et par réduction d'oxygène. Les piles à combustible alimentées par de l'hydrogène peuvent être utilisées dans des systèmes stationnaires dans les domaines de l'habitat, de l'industrie et des réseaux et dans des systèmes mobiles dans le domaine des transports et des appareils portables (téléphones, ordinateurs). L'utilisation de l'hydrogène comme vecteur énergétique principal et carburant pourrait contribuer d'une part à la réduction de la dépendance globale envers les énergies fossiles et d'autre part à la diminution des émissions des gaz à effet de serre (CH4, CO₂) et de la pollution atmosphérique (CO, NO_{R}).

Aujourd'hui, l'hydrogène est essentiellement produit à partir d'hydrocarbures par vaporeformage du gaz naturel ou par gazéification de résidus pétroliers ou de charbon. D'un point de vue économique, les procédés les plus attractifs pour produire l'hydrogène à partir d'énergies fossiles passent par la transformation de charges légères d'hydrocarbures en gaz de synthèse constitué par un mélange d'hydrogène H₂, d'oxyde de carbone CO, de dioxyde de carbone CO₂, de méthane CH4 et d'eau H₂O. Ce gaz est obtenu par réaction des hydrocarbures avec de la vapeur d'eau en présence d'un catalyseur au nickel. L'inconvénient de ces procédés est que la transformation a lieu à haute température (840°C à 950°C) et à pression modérée (20 à 30 bars) et qu'ils font intervenir des ressources fossiles.

Afin de répondre à des besoins industriels constants en termes de nouvelles technologies des piles à combustible et à des contraintes environnementales et économiques, un intérêt croissant s'est alors manifesté pour les énergies renouvelables *a priori* inépuisables et perturbant moins l'environnement que les énergies fossiles. Elles présentent l'avantage d'apporter une contribution négligeable à l'accroissement de l'effet de serre et permettent un gain de coût lié à un faible apport d'énergie.

Parmi ces énergies renouvelables, on trouve des alcools et en particulier le bio-éthanol obtenu à partir de la biomasse. L'éthanol est le biocarburant dont l'usage est le plus répandu. Il est produit à partir de trois grands types de cultures : les plantes sucrières (par exemple la canne à sucre et la betterave), les plantes amylacées (par exemple le blé et le maïs) et les matières lignocellulosiques (par exemple le bois).

Le vaporeformage endothermique de l'éthanol se produit selon la réaction (1) :

C₂H₅OH + 3 H₂O → 6 H₂ + 2 CO₂ (1)

Cette réaction se produit en présence de vapeur d'eau et nécessite un apport d'énergie. En pratique, il est nécessaire d'aider la réaction, notamment à l'aide de catalyseurs. L'énergie nécessaire à cette réaction peut être fournie en ajoutant de l'oxygène ou de l'air dans le milieu réactionnel. Il se produit alors une réaction exothermique d'oxydation partielle de l'éthanol définie ci-dessous :

C₂H₅OH + 1,5 O₂ → 3 H₂ + 2 CO₂ (2)

Au cours de cette réaction, une partie de l'éthanol est brûlé, ce qui permet de fournir l'énergie nécessaire pour réaliser simultanément la réaction (1).

Cependant, la production d'hydrogène à partir de l'éthanol présente des inconvénients tels que la formation de produits secondaires et la désactivation des catalyseurs selon les conditions opératoires et le catalyseur utilisés.

En effet, la déshydrogénation de l'éthanol produit de l'acétaldéhyde et de l'hydrogène selon la réaction (3), alors que la décomposition de l'éthanol (et/ou de l'acétaldéhyde) produit du méthane, du monoxyde de carbone et de l'hydrogène selon la réaction (4) :

C₂H₅OH → C₂H₄O + H₂ (3)

C₂H₅OH → CH₄ + CO + H₂ (4)

Le méthane a la caractéristique d'être très difficile à reformer, ce qui pénalise le rendement en H₂.

De l'acétone peut également être générée selon la réaction (5) :

2 C₂H₅OH + H₂O → CH₃COCH₃ + CO₂ + 4 H₂ (5)

Enfin, un dépôt de carbone peut être observé sur le catalyseur. Ce dépôt de carbone peut provenir de différentes réactions telles que la réaction de Boudouard, mais généralement il provient des réactions (6) et (7) suivantes selon lesquelles l'éthanol se déhydrate pour former de l'éthylène (6) qui est transformé en coke par une réaction de polymérisation (7) :

C₂H₅OH → C₂H₄ + H₂O (6)

C₂H₄ → coke (7)

Même en petites quantités, l'éthylène conduit rapidement à la formation de carbone solide (coke) qui empoisonne la surface du catalyseur et entraîne la chute de l'activité catalytique.

Ce dépôt carboné est connu pour être l'élément le plus néfaste pour la réaction de vaporeformage de l'éthanol et il est à l'origine de la désactivation des catalyseurs et du bouchage des réacteurs industriels de vaporeformage.

Un autre problème lié à l'utilisation du bio-éthanol est le coût élevé du procédé de distillation de l'éthanol à partir d'une solution aqueuse obtenue par fermentation de la biomasse.

Dans un tel contexte, il est donc devenu nécessaire de proposer des catalyseurs ou électrocatalyseurs à bas coûts qui sont capables de couper les liaisons C-C des composés organiques issus des ressources renouvelables telles que le bio-éthanol et qui présentent de bonnes performances même lorsque l'éthanol est apporté sous la forme d'une solution aqueuse très diluée, c'est-à-dire dans laquelle le rapport molaire H₂O/C₂H₅OH est élevé.

Les catalyseurs appropriés pour réaliser le vaporeformage d'un alcool ou d'un mélange d'alcools doivent permettre une production élevée d'hydrogène tout en évitant la formation des sous-produits précités.

Les métaux nobles sont bien connus dans la littérature pour être hautement actifs en hydrogénation/déshydrogénation et favoriser la rupture de liaisons C-C (Auprêtre et al., Catal. Commun., 2002, 263). Généralement les métaux nobles les plus étudiés sont le rhodium, le ruthénium, le palladium et le platine. L'inconvénient de l'utilisation de ces métaux nobles reste cependant leur coût élevé.

De nombreux procédés de production d'hydrogène utilisant des catalyseurs à bas coût, ont par la suite été developpés.

Tout d'abord, des métaux non nobles de type nickel ou cobalt ont été décrits ; puis, il a été proposé des catalyseurs mixtes à base de plusieurs métaux afin d'améliorer les phases actives des catalyseurs et de réduire la formation de produits secondaires.

C'est ainsi par exemple que la demande internationale WO 2009/009844 décrit l'utilisation de catalyseurs mixtes à base de cérium et d'un lanthanide et/ou du zirconium et/ou de l'ytrium, répondant à la formule CeₓM₁₋ₓO₂. Ces catalyseurs sont stables pendant 30 heures environ et présentent de bonnes sélectivités vis-à-vis de l'hydrogène sans formation de monoxyde de carbone. Toutefois, les températures de vaporeformage au cours de leur mise en oeuvre sont élevées (de l'ordre de 450°C-500°C) et le mélange obtenu à l'issue de la réaction contient de petites quantités d'acétaldéhyde et d'éthylène.

La demande de brevet US 2012/0201745 décrit l'utilisation de catalyseurs de structure perovskite La₁₋ₓMₓNiO₃ stables pendant 30 heures environ et qui permettent d'éviter la formation d'acétone et d'éthylène. Cependant, la température à laquelle la réaction de vaporeformage doit être réalisée en utilisant ces catalyseurs est également élevée (de l'ordre de 500°C) et la réaction conduit à la formation de méthane en quantités de l'ordre de 5 à 10%.

La demande de brevet FR 2 795 339 décrit un procédé de reformage de l'éthanol par la vapeur d'eau en présence d'un catalyseur mixte Ni-Cu/SiO₂. Ce prodécé est réalisé à une température élevée (de l'ordre de 700°C) et conduit cependant à un rendement assez faible en hydrogène (inférieur à 40% molaire) et à la formation d'un dépôt de carbone sur le catalyseur. La formation de carbone n'est donc pas totalement évitée et la température de vaporeformage est élevée.

Enfin, il a été récemment proposé, un catalyseur nano-oxyhydrure mixte à base de cérium et de nickel de formule CeNi_{1,0}H_{z}O_{y}. Un tel catalyseur est préparé par coprécipitation des hydroxydes correspondants à partir de mélanges de nitrates de cérium et de nickel en présence de triéthylamine à titre d'agent de précipitation. Après filtration, le précipité ainsi obtenu est séché à 100°C, puis calciné à une température de 500°C pendant 4 heures. L'oxyde de formule CeNi_{1,0}O_{y} obtenu est alors activé sous forme d'un oxyhydrure de formule CeNi_{1,0}H_{z}O_{y} par un traitement sous hydrogène à une température de 250°C pendant 10 heures. Le catalyseur activé ainsi obtenu est stable pendant 50 heures, sélectif et permet de produire de l'hydrogène à partir d'éthanol à basse température, c'est-à-dire à des températures de l'ordre de 60°C environ (Pirez et al., Angew. Chem. Int. Ed., 2011, 10193). Cependant, la mise en oeuvre de ce catalyseur pour la transformation de l'éthanol en hydrogène présente néanmoins l'inconvénient de générer 5% d'un mélange de méthane et d'acétaldéhyde et une quantité non négligeable de carbone solide, à raison d'environ 63 mg par gramme de catalyseur et par heure.

Les inventeurs se sont donc donné pour but de pourvoir à un matériau économique pouvant avantageusement être utilisé pour catalyser la réaction de production d'hydrogène à basse température à partir de l'éthanol, et plus généralement à partir d'alcools inférieurs, ledit catalyseur ne présentant pas les inconvénients des catalyseurs de l'art antérieur, en particulier conduisant à la formation d'hydrogène avec un bon rendement, tout en évitant au maximum la formation de carbone solide.

Ainsi, la présente invention a pour objet un procédé de production d'hydrogène à basse température par transformation d'un alcool ou d'un mélange d'alcools, ledit procédé comprenant les étapes suivantes :
1) une première étape de synthèse d'un matériau oxyhydrure M1 électriquement neutre, à base de cérium, de nickel, d'atomes d'oxygène, d'atomes d'hydrogène et éventuellement d'un métal M choisi parmi Al et Zr, matériau dans lequel :
   i) le rapport molaire Ni/Ce varie de 0,1 à 5,
   ii) le rapport molaire M/Ce varie de 0 à 1, et
   iii) au moins une partie des atomes d'hydrogène présents dans ledit matériau M1 est sous forme d'ions hydrures,
   ladite synthèse étant effectuée selon les sous-étapes 1-i) à 1-v) suivantes :
   1-i) une première sous-étape de préparation d'une solution aqueuse comprenant au moins un précurseur de cérium, au moins un précurseur de nickel et éventuellement au moins un précurseur de métal M,
   1-ii) une deuxième sous-étape de coprécipitation desdits précurseurs de cérium, de nickel et éventuellement de métal M sous forme des hydroxydes de cérium, de nickel et éventuellement de métal M correspondants, par ajout à ladite solution aqueuse, d'au moins un agent de précipitation,
   1-iii) une troisième sous-étape de filtration desdits hydroxydes pour obtenir un solide filtré,
   1-iv) une quatrième sous-étape de séchage du solide filtré obtenu ci-dessus à la sous-étape 1-iii) à une température comprise entre 40°C et 150°C environ, pendant une durée comprise entre 1 et 24 heures environ, pour obtenir un matériau solide M2 électriquement neutre, à base de cérium, de nickel, d'atomes d'oxygène, d'atomes d'hydrogène et éventuellement d'un métal M, dans lequel :
      i) les définitions du métal M, et des rapports molaires Ni/Ce et M/Ce sont les mêmes que celles se rapportant au matériau oxyhydrure M1,
      ii) au moins une partie des atomes d'hydrogène présents dans ledit matériau M2 forme avec les atomes d'oxygène des fonctions hydroxyle, et
      iii) ledit matériau solide M2 est exempt d'ions hydrures, et
         1-v) une cinquième sous-étape de traitement du matériau solide M2 obtenu ci-dessus à l'étape précédente en présence d'hydrogène, pour obtenir un matériau oxyhydrure M1,
2) une seconde étape de mise en contact, à une basse température variant de 20°C à 60°C, du matériau oxyhydrure M1 obtenu ci-dessus à l'étape précédente, dans un premier temps avec un mélange gazeux comprenant au moins un alcool inférieur, de l'eau et de l'azote, puis dans un deuxième temps avec de l'oxygène,
   ledit procédé étant caractérisé en ce que l'étape de synthèse du matériau oxyhydrure M1 ne comprend pas de sous-étape de calcination.

Dans la présente invention, l'expression « étape de calcination » signifie une étape de traitement thermique à une température allant de 300°C à 800°C, notamment pendant 1 à 6 heures, sous air, oxygène ou gaz neutre.

Sans vouloir être liés à une quelconque théorie, les inventeurs pensent que le matériau oxyhydrure M1 et le matériau solide M2 peuvent respectivement être représentés par les formules (I) et (I') suivantes :

CeMₚNiₓH_{z}O_{y} (I)

CeMₚNiₓO_{y'}H_{z'} (I')

dans lesquelles M est un métal choisi parmi Al et Zr, 0 ≤ p ≤ 1 ; 0,1 ≤ x ≤ 5 ; les valeurs de y, y', z, et z' n'ayant par contre à ce jour pas été déterminées.

En effet, contrairement à ce qui a été précédemment publié dans la demande de brevet FR 2 876 996 qui décrit des composés répondant à la formule TMₐOₓH_{y}, dans laquelle T est une terre rare tel que du cérium, M est un élément métallique tel que du nickel et 0,01 ≤ a ≤ 10 ; 1 ≤ x ≤ 10 et 0,1 ≤ y ≤ 100, les inventeurs se sont rendu compte que les matériaux M1 et M2 respectivement représentés par les formules (I) et (I') ci-dessus s'oxydent et/ou se réhydratent rapidement à l'air. Ainsi, comme les méthodes de caractérisations physico-chimiques actuellement disponibles pour évaluer les valeurs de y, y', z, z' dans lesdits matériaux impliquent leur remise à l'air, ces méthodes ne permettent d'obtenir que des valeurs présentant une très grande incertitude et ne reflétant pas la réalité.

Dans un mode de réalisation préféré de l'invention, le précurseur de cérium est un sel de cérium (III) choisi parmi le nitrate de cérium, l'acétate de cérium et le chlorure de cérium et le précurseur de nickel est un sel de nickel (II) choisi parmi le nitrate de nickel, le chlorure de nickel et le sulfate de nickel.

En outre, le précurseur du métal M peut être un sel de zirconium (IV) tel que le nitrate de zirconium ou un sel d'aluminium (III) tel que le nitrate d'aluminium.

Par ailleurs, selon une caractéristique préférée du procédé de l'invention, la concentration en précurseur de cérium et en précurseur de nickel dans ladite solution aqueuse varie indépendamment de 0,1 à 1 mol/l environ, une concentration voisine de 0,5 mol/l étant particulièrement préférée pour chacun des précurseurs.

Lorsque le métal M est présent, la concentration en précurseur de métal M dans ladite solution aqueuse varie indépendamment de 0,1 à 1 mol/l environ.

L'agent de précipitation est préférentiellement choisi parmi la triéthylamine, l'hydroxyde d'ammonium, l'hydroxyde de potassium, l'hydroxyde de sodium et le carbonate de sodium.

Lorsque lesdits précurseurs de cérium et de nickel ont coprécipité sous forme des hydroxydes de cérium et de nickel correspondants selon l'étape 1-ii) et sont filtrés selon l'étape 1-iii), ledit solide filtré obtenu peut être avantageusement lavé et rincé par de l'eau et/ou par de l'alcool.

Selon une forme de réalisation particulièrement préférée, la sous-étape de séchage 1-iv) est réalisée à une température de 100°C environ pendant une durée de 24 heures environ.

Des caractérisations physico-chimiques ont été effectuées par les inventeurs de la présente demande sur le matériau solide M2 ainsi obtenu à la sous-étape de séchage 1-iv) du procédé conforme à l'invention (voir exemple 1, paragraphe 1.2 illustrant la présente demande). Ces différentes caractérisations ont montré d'une part, que le matériau solide M2 comprend des atomes d'hydrogène répartis de telle manière qu'ils existent très majoritairement sous forme de fonctions hydroxyle et d'autre part que sa structure diffère de celle du matériau oxyde de formule CeNiₓO_{y} obtenu par la mise en oeuvre du procédé de Pirez *et al.* (*ibid*) qui comprend une étape de calcination à 500°C.

Au cours de l'étape suivante 1-v) du procédé conforme à l'invention, ledit matériau solide M2 est capable d'incorporer des ions hydrures au sein de lacunes anioniques existant dans sa structure cristalline lorsqu'il est mis en contact avec de l'hydrogène. Il se forme alors un matériau oxyhydrure M1 dans lequel au moins une partie des atomes d'hydrogène est sous forme d'ions hydrures.

En effet, la réaction de traitement du matériau solide M2 en présence d'hydrogène selon l'étape 1-v) du procédé conforme à l'invention permet de former des ions hydrures *in situ* qui sont alors insérés dans le matériau solide.

Lors de ladite étape, plusieurs lacunes anioniques (□) sont formées dans le matériau solide M2 à partir des fonctions hydroxyle présentes selon la réaction (8) suivante :

2OH⁻ → O²⁻ + □ + H₂O (8)

Puis, un site actif du matériau solide O²⁻ M^{*n*+} □ (avec M^{*n*+} représentant le cation du solide) est créé lors de l'activation en température *in situ* sous hydrogène du matériau solide M2. Ce site actif permet alors la dissociation hétérolytique de l'hydrogène, d'une part en insérant un hydrure H⁻ dans une lacune anionique et d'autre part, en faisant réagir un cation H⁺ avec un anion O²⁻ du matériau solide pour former une fonction hydroxyle selon la réaction (9) suivante :

O²⁻ M^{*n*+} □ + H₂ → OH ⁻M^{*n*+}H⁻ (9)

Par ailleurs, ledit matériau oxyhydrure M1 obtenu selon le mécanisme présenté ci-dessus et comprenant des ions hydrures, est pyrophorique en présence d'air et ne devrait pas être exposé à l'air même pendant un temps très court.

En effet, la réaction entre l'ion hydrure du matériau oxyhydrure M1 et l'oxygène (présent dans l'air) est très exothermique et conduit à la formation de fonctions hydroxyle dans ledit matériau selon la réaction (10) suivante :

H⁻ + ½ O₂ → OH⁻ (10)

Les fonctions hydroxyle formées dans ledit matériau peuvent être ensuite éliminées sous forme d'eau.

Ainsi, toute caractérisation physico-chimique qui implique une remise à l'air du matériau oxyhydrure M1, entraîne l'élimination des ions hydrures.

Cette très grande réactivité est d'ailleurs utilisée comme apport d'énergie pour réaliser l'étape suivante 2) de mise en contact du matériau oxyhydrure M1 avec un alcool à basse température du procédé conforme à l'invention.

Les inventeurs de la présente demande ont toutefois pu montrer la présence des ions hydrures dans le matériau oxyhydrure M1 obtenu selon l'étape 1-v) du procédé de l'invention par des expériences de diffusion de neutrons (voir exemple 2, paragraphe 2.2 illustrant la présente demande).

A titre d'exemple, la sous-étape 1-v) de traitement en présence d'hydrogène du matériau solide M2 peut avantageusement être réalisée à pression atmosphérique à une température variant de 50°C à 400°C environ et encore plus préférentiellement à une température de l'ordre de 250°C, afin d'obtenir une incorporation maximale d'ions hydrures dans le matériau oxyhydrure M1.

A titre indicatif, lorsque la température de traitement en présence d'hydrogène est de 250°C environ, alors la durée de la sous-étape 1-v) est comprise entre 1 et 10 heures.

Selon une forme de réalisation particulière et préférée de l'invention, la sous-étape 1-v) de traitement en présence d'hydrogène est réalisée *in situ,* c'est-à-dire directement dans un réacteur adapté à la production d'hydrogène par transformation d'alcools inférieurs. Cela permet d'éviter que le matériau oxyhydrure M1 ainsi obtenu au cours de la sous-étape 1-v), ne s'oxyde à l'air avant d'être engagé dans l'étape 2).

Le matériau oxyhydrure M1 obtenu à l'issue de l'étape 1) de synthèse du procédé conforme à l'invention, sans avoir subi d'étape de calcination, est apte à catalyser la réaction de transformation de l'éthanol à basse température (et plus généralement des alcools inférieurs) et conduit, dans ces conditions, à la formation d'hydrogène avec un bon rendement, tout en évitant la formation de carbone solide.

Ce résultat est particulièrement surprenant dans la mesure où les procédés de fabrication de tels catalyseurs habituellement proposés dans l'art antérieur, notamment par Pirez *et al.* (*ibid*) mettent obligatoirement en oeuvre une étape de calcination qui consiste généralement en un traitement thermique à haute température (de l'ordre de 500°C), et qui permet d'améliorer la stabilité du catalyseur et de cette manière, son activité catalytique.

Parmi les matériaux oxyhydrures M1, on préfère ceux dans lesquels le rapport molaire M/Ce est égal à zéro, ainsi que ceux dans lesquels le rapport molaire Ni/Ce varie de 0,3 à 1. Les matériaux oxyhydrures M1 dans lesquels le rapport molaire M/Ce est égal à 0 et le rapport molaire Ni/Ce varie de 0,3 à 1 sont tout particulièrement préférés.

Par ailleurs, lorsque le rapport molaire M/Ce est strictement supérieur à zéro, le matériau oxyhydrure M1 est capable de stocker de plus grandes quantités d'ions hydrures. Selon une forme de réalisation encore plus préférée, on choisira donc les matériaux oxyhydrures M1 dans lesquels le rapport molaire M/Ce est égal à 0,5 environ et le rapport molaire Ni/Ce varie de 0,3 à 1.

Selon l'invention, on entend par alcools inférieurs, les alcools ayant de 1 à 5 atomes de carbone et parmi lesquels on peut mentionner, le méthanol, l'éthanol, le propan-1-ol, le butan-1-ol et le pentan-1-ol ou un mélange d'alcools tel que le bio-éthanol.

Dans un mode de réalisation préféré de l'invention, l'alcool utilisé dans ledit mélange gazeux est l'éthanol.

Selon l'invention, l'expression « à basse température » désigne une température variant généralement de 20°C à 60°C environ.

Ainsi, le procédé conforme à la présente invention et tel que décrit ci-dessus conduit à un mélange gazeux constitué majoritairement d'hydrogène et de dioxyde de carbone et ce, en limitant de façon très importante la formation de carbone solide.

Selon une forme de réalisation préférée de l'invention, la quantité de matériau solide M2 utilisé pour la sous-étape 1-v) varie de 0,01 à 0,05 g environ. Cette quantité est tout particulièrement de l'ordre de 0,03 g.

L'étape de mise en contact 2) décrite précédemment est effectuée avantageusement selon les séquences suivantes :
2-i) l'introduction d'un mélange gazeux eau/alcool/azote dans un réacteur comprenant le matériau oxyhydrure M1 obtenu à l'étape précédente 1), à une température d'au moins 130°C, et plus préférentiellement à une température de 160°C,
2-ii) l'introduction d'oxygène dans le réacteur et le maintien de la température pendant une période d'induction d'au moins 3 minutes, puis
2-iii) la diminution de la température jusqu'à une température inférieure à 60°C ou plus préférentiellement jusqu'à une température de l'ordre de 50°C.

En effet, la réaction catalytique doit être initiée à une température d'au moins 130°C. Après une période d'induction de quelques minutes, la température dans le réacteur augmente. Alors, seulement un faible apport d'énergie est nécessaire et la température du four peut être réduite à une température inférieure à 60°C.

Le rapport molaire eau/alcool au sein du mélange gazeux varie de préférence de 1/2 à 13/1. De manière encore plus préférée, le rapport molaire eau/alcool est de 3/1 environ.

Le mélange gazeux eau/alcool/azote introduit au départ dans le réacteur contient avantageusement 15% molaire d'alcool par rapport au mélange gazeux eau/alcool/azote. Cela permet de maintenir le solide sous forme oxyhydrure.

En outre, l'addition d'oxygène dans le mélange gazeux conduit favorablement à une augmentation de la conversion de l'éthanol et à la diminution des quantités relatives de produits secondaires tels que le méthane CH₄, l'acétaldéhyde CH₃CHO, l'acétone (CH₃)₂CO et le monoxyde de carbone CO.

Par ailleurs, la quantité de dioxyde de carbone CO₂ augmente à la concentration la plus haute de O₂ c'est-à-dire lorsque le rapport molaire O₂/alcool est de 2,5/1 environ.

Ainsi, selon un mode de réalisation préféré du procédé conforme à l'invention le rapport molaire O₂/alcool varie de 0,5/1 à 2,5/1 environ.

Cependant, étant donné que la quantité d'hydrogène formée diminue lorsque le rapport molaire O₂/alcool est supérieur à 1,2/1, un bon compromis consiste à fixer le rapport molaire O₂/alcool préférentiellement à 1,6/1.

Dans un mode de réalisation préféré, on utilise un mélange gazeux alcool/eau/O₂/N₂ dans lequel le rapport molaire du mélange alcool/eau/O₂/N₂ est de 1/3/1,6/1,3.

Selon une forme de réalisation préférée de l'invention, le débit du mélange gazeux varie de 10 à 100 ml/min environ, et encore plus préférentiellement il est de l'ordre de 60 ml/min environ.

Ainsi, le procédé de production d'hydrogène conforme à l'invention permet la transformation d'alcools en hydrogène à basse température avec un bon rendement et un très faible apport d'énergie de par l'utilisation du catalyseur oxyhydrure M1 obtenu selon l'étape 1) du procédé conforme à l'invention et tel que décrit précédemment.

Le procédé conforme à l'invention a également pour avantage d'utiliser un catalyseur capable de performances améliorées puisqu'il est montré dans la présente demande que la réaction de transformation de l'alcool peut être mise en oeuvre à une température de seulement 50°C.

Le procédé conforme à l'invention permet en outre d'éviter pratiquement totalement la formation de méthane et d'acétaldéhyde (<2%).

De plus, il a été découvert de façon surprenante que la formation de carbone pouvait être évitée en supprimant l'étape de calcination au cours de la synthèse du matériau oxyhydrure M1 utilisé ensuite dans l'étape 2) du procédé de production d'hydrogène conforme à l'invention.

La suppression de l'étape de calcination ainsi que la diminution des températures des séquences 2-i) et 2-iii) lors de la transformation d'alcools en hydrogène dans le procédé conforme à l'invention permettent également d'améliorer le coût de production.

Enfin, l'invention a également pour objet l'utilisation d'un matériau oxyhydrure M1 tel qu'obtenu par la mise en oeuvre de l'étape 1) de synthèse du procédé conforme à l'invention, à titre de catalyseur pour la réaction de transformation d'alcools inférieurs en hydrogène à basse température.

La présente invention est illustrée par les exemples de réalisation suivants, auxquels elle n'est cependant pas limitée.

### EXEMPLE 1

### PREPARATION ET CARACTERISATIONS DE MATERIAUX SOLIDES M2 CONFORMES A L'INVENTION - COMPARAISONS AVEC DES COMPOSES CALCINES SELON L'ART ANTERIEUR

### 1.1 Préparation des matériaux solides M2 issus de l'étape de séchage 1-iv) du procédé conforme à l'invention (composés séchés)

### 1.1-a) Préparation du composé séché 1, dans lequel le rapport molaire Ni/Ce est égal à 1 et le rapport molaire M/Ce est égal à 0

Le composé séché **1** a été préparé par coprécipitation des hydroxydes correspondants à partir d'une solution comprenant un volume de 100 mL d'une solution aqueuse à 0,5 M de nitrate de cérium et un volume de 100 mL d'une solution aqueuse à 0,5 M de nitrate de nickel et en utilisant comme agent de précipitation la triéthylamine.

Ladite solution a été additionnée par un goutte à goutte rapide à un volume de 250 mL d'une solution de triéthylamine diluée à 1,5 M dans le méthanol.

Au cours de cette addition, on a observé la formation d'un précipité d'hydroxydes métalliques qui a été filtré, lavé et rincé par un volume total équivalent au volume récupéré, et ce 3 fois, par de l'eau et par du méthanol. Le solide obtenu a ensuite été séché à 100°C pendant 24 heures et broyé.

### 1.1-b) Préparation du composé séché 2, dans lequel le rapport molaire Ni/Ce est égal à 0,5 et le rapport molaire M/Ce est égal à 0

Le composé séché **2** a été préparé par coprécipitation des hydroxydes correspondants à partir d'une solution comprenant un volume de 200 mL d'une solution aqueuse à 0,5 M de nitrate de cérium et un volume de 100 mL d'une solution aqueuse à 0,5 M de nitrate de nickel et en utilisant comme agent de précipitation la triéthylamine.

Ladite solution a été additionnée par un goutte à goutte rapide à un volume de 375 mL d'une solution de triéthylamine diluée à 1,5 M dans le méthanol.

Au cours de cette addition, on a observé la formation d'un précipité d'hydroxydes métalliques qui a été filtré, lavé et rincé par un volume total équivalent au volume récupéré, et ce 3 fois, par de l'eau et par du méthanol. Le solide obtenu a ensuite été séché à 100°C pendant 24 heures et broyé.

### 1.1-c) Préparation du composé séché 3, dans lequel le rapport molaire Ni/Ce est égal à 0,25 et le rapport molaire M/Ce est égal à 0

Le composé séché **3** a été préparé par coprécipitation des hydroxydes correspondants à partir d'une solution comprenant un volume de 200 mL d'une solution aqueuse à 0,5 M de nitrate de cérium et un volume de 50 mL d'une solution aqueuse à 0,5 M de nitrate de nickel et en utilisant comme agent de précipitation la triéthylamine.

Ladite solution a été additionnée par un goutte à goutte rapide à un volume de 312,5 mL d'une solution de triéthylamine diluée à 1,5 M dans le méthanol.

Au cours de cette addition, on a observé la formation d'un précipité d'hydroxydes métalliques qui a été filtré, lavé et rincé par un volume total équivalent au volume récupéré, et ce 3 fois, par de l'eau et par du méthanol. Le solide obtenu a ensuite été séché à 100°C pendant 24 heures et broyé.

### 1.2 Caractérisation des composés séchés 1, 2 et 3 et comparaison avec des composés calcinés selon l'art antérieur

Les composés séchés **1, 2 et 3** ont été analysés par mesures de réduction en température programmée (RTP).

Ces mesures ont été effectuées avec un analyseur comprenant un détecteur de conductivité thermique (TCD), vendu sous la dénomination commerciale Microméritics AutoChem 2920 Analyzer par la société Microméritics.

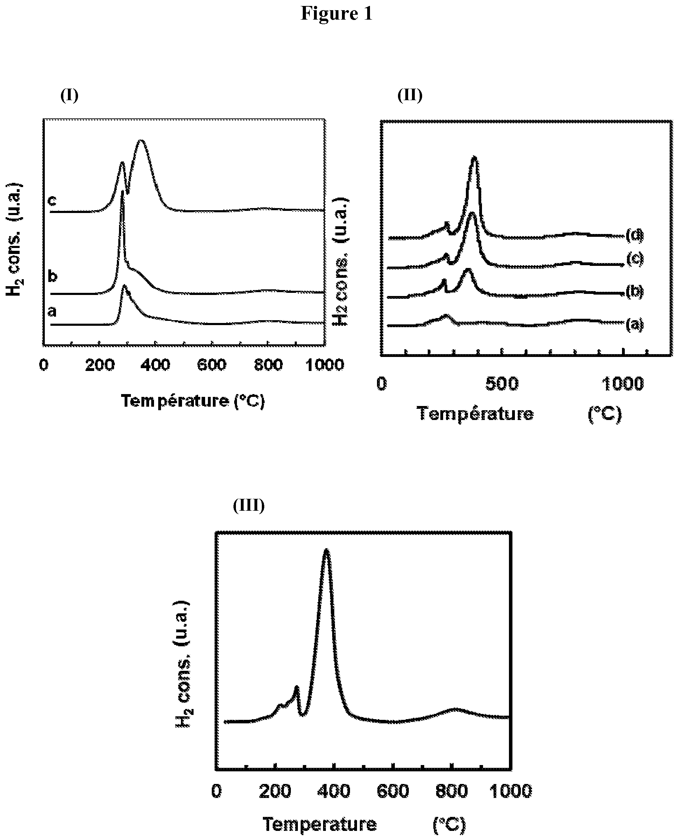

La figure 1 annexée montre l'évolution de la consommation d'hydrogène (H₂ cons., en unité arbitraire u.a.) en fonction de la température (en °C) d'une part pour les composés séchés **1, 2** et **3** issus de l'étape 1-iv) du procédé conforme à l'invention (matériaux solides M2) et d'autre part pour certains composés calcinés répondant à la formule CeNiₓO_{y} déjà décrits dans Pirez *et al. (ibid)* et dans Jalowiecki-Duhamel et al., Int. J. Hydrogen Energy, 2010, 35, 12741-12750.

Sur la figure 1, le premier pic correspond à la température requise pour effectuer l'étape de traitement en présence d'hydrogène et conduire à un oxyhydrure. Il a d'ailleurs été montré qu'une température plus élevée de traitement en présence d'hydrogène conduit à une diminution du taux de conversion de l'éthanol lors de l'étape suivante de mise en contact de l'éthanol avec l'oxyhydrure préalablement formé.

D'après la figure 1, les composés séchés **3** (figure 1-Ia), **2** (figure 1-Ib) et **1** (figure 1-Ic) doivent être traités en présence d'hydrogène à une température comprise entre 200°C et 300°C et plus particulièrement à une température d'environ 250°C-270°C. En effet, un pic de réduction à basse température est observé à 250-270°C.

A titre comparatif, les composés calcinés à 500°C CeNi_{0,2}O_{y} (figure 1-IIa), CeNi_{0,4}O_{y} (figure 1-IIb), CeNi_{0,7}O_{y} (figure 1-IIc), CeNi_{0,9}O_{y} (figure 1-IId) et CeNi_{1,0}O_{y} (figure 1-III) doivent être également traités en présence d'hydrogène à une température comprise entre 200°C et 300°C.

En conclusion, la figure 1 montre que les composés séchés **1, 2** et **3** (matériaux solides M2) présentent un comportement différent des composés calcinés à teneur en nickel équivalente avec un pic de réduction à basse température nettement plus important sur les composés séchés **1, 2** et **3** (matériaux solides M2).

Par ailleurs, des analyses par diffractométrie de rayons X (DRX) des composés séchés **1, 2** et **3** (matériaux solides M2 obtenus selon l'étape 1-iv) du procédé conforme à l'invention) et à titre comparatif, de certains composés calcinés décrits dans la publication Ponchel et al. (Phys. Chem. Chem. phys., 2000, 2, 303-312), ont été réalisées.

Les analyse DRX ont été effectuées à l'aide d'un diffractomètre vendu sous la dénomination commerciale D8 Advance par la société Bruker.

Ces analyses permettent d'indiquer si les composés présentent une phase cérine CeO₂ et/ou une phase nickel. La phase nickel dans les composés calcinés de l'art antérieur correspond à de l'oxyde de nickel NiO. La phase nickel dans les composés séchés **1, 2** et **3** (matériaux solides M2) obtenus selon le procédé de l'invention, lorsqu'elle est observée par DRX, correspond à un mélange complexe d'hydroxydes de nickel. Pour des teneurs en Ni faibles, aucune phase liée au Ni n'est observée, elle peut donc être amorphe et/ou les ions nickel peuvent être insérés dans la phase cérine formant une solution solide.

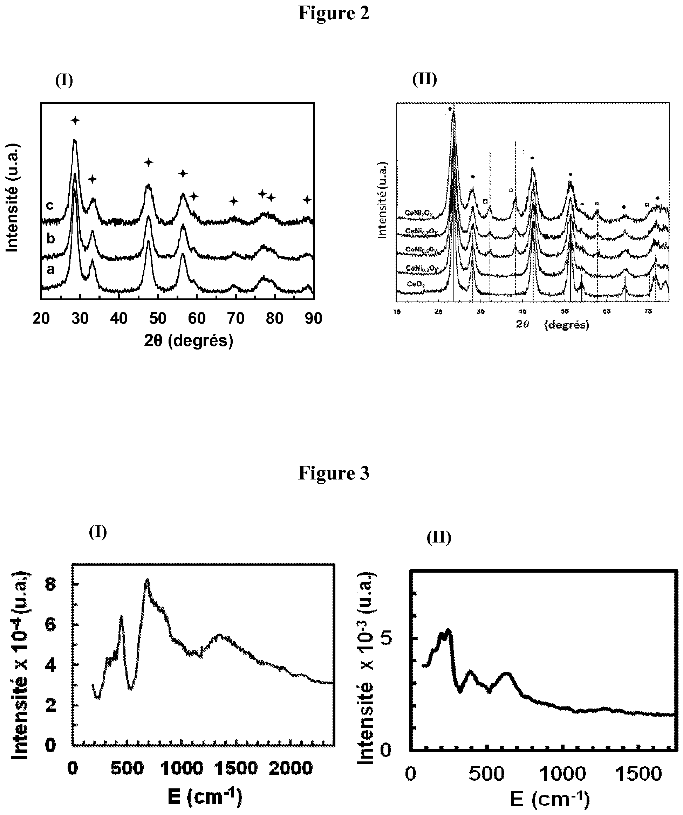

La figure 2 montre l'évolution de l'intensité (en unité arbitraire u.a.) en fonction de l'angle 2θ (en degrés). Sur la figure 2-I, les croix correspondent à la phase cérine CeO₂. Sur la figure 2-II, les ronds pleins correspondent à la phase cérine CeO₂ et les carrés vides correspondent à la phase nickel.

La figure 2-I montre l'absence d'une phase nickel dans les composés séchés **3** (figure 2-Ia), **2** (figure 2-Ib) et **1** (figure 2-Ic), obtenus selon le procédé conforme à l'invention.

A titre comparatif, la figure 2-II montre que la phase nickel n'est pas observée dans le composé CeO₂ et dans le composé calciné à 500°C CeNi_{0,2}O_{y} qui présente une très faible teneur en nickel. Par contre, elle est observée dans les composés calcinés à 500°C CeNi_{0,5}O_{y}, CeNi_{0,7}O_{y} et CeNi_{1,0}O_{y}.

En ce qui concerne la phase cérine, elle est observée dans les composés séchés **1, 2** et **3** conformes à l'invention, ainsi que dans tous les composés calcinés de l'art antérieur. Par contre, la présence d'un bruit de fond dans les spectres DRX correspondant aux composés séchés conformes à l'invention (figure 2-I) indiquent que la phase cérine est moins bien cristallisée dans ces composés que dans les composés calcinés de l'art antérieur (figure 2-II).

Enfin, des mesures d'aire spécifique des composés séchés **1, 2** et **3** (matériaux solides M2) obtenus selon le procédé de l'invention ont été effectuées.

Ces mesures d'aires spécifiques ont été conduites à l'aide de la méthode BET (Brunauer-Emmett-Teller) et ont été réalisées avec un appareil vendu sous la dénomination commerciale Tristar II 3020 par la société Microméritics.

Le tableau 1 ci-dessous reporte les aires spécifiques (en m².g⁻¹) des composés séchés **1, 2** et **3** et à titre comparatif de différents composés calcinés de formule CeNiₓO_{y} (x variant de 0,07 à 1), de NiO et de CeO₂ reportées dans Pirez *et al.* (*ibid*) et Jalowiecki-Duhamel *et al. (ibid).*

**TABLEAU 1**

| **Composés séchés** | **Aire spécifique (B.E.T)** | **Taille des cristallites ^{(a)}** | |
|---|---|---|---|
| | **m².g⁻¹** | **nm** | |
| | | **CeO₂** | **Hydroxydes de nickel** |
| **1** | 145 | 3,3 | - |
| **2** | 141 | 4,2 | - |
| **3** | 75 | 4,6 | - |

| **Composés calcinés de l'art antérieur** | **Aire spécifique (B.E.T)** | **Taille des cristallites ^{(a)}** | |
|---|---|---|---|
| | **m².g⁻¹** | **nm** | |
| | | **CeO₂** | **NiO** |
| CeNi_{5,0}O_{y} | 84 | 4,6 | 9,4 |
| CeNi_{1,0}O_{y} | 94 | 5,0 | 10,0 |
| CeNi_{0,9}O_{y} | 109 | 4,4 | 11,0 |
| CeNi_{0,7}O_{y} | 91 | 4,8 | 12,0 |
| CeNi_{0,4}O_{y} | 136 | 4,7 | 8,0 |
| CeNi_{0,2}Oy | 100 | 5,1 | - |
| CeNi_{0,07}O_{y} | 92 | 5,6 | - |
| CeO₂ | 61 | 7,8 | - |
| NiO | 27 | - | 20,8 |

| | | | |
|---|---|---|---|
| (a) déduite de l'analyse DRX en utilisant l'équation de Scherrer | | | |

En conclusion, les aires spécifiques sont globalement du même ordre de grandeur pour les composés séchés **1, 2** et **3** conformes à l'invention et les composés calcinés selon l'art antérieur.

Par contre, il apparaît que l'aire spécifique du composé séché **1** est plus grande (145 m².g⁻¹) que l'aire spécifique d'un composé calciné (CeNi_{1,0}O_{y}) (94 m².g⁻¹) comportant la même teneur en nickel.

Le tableau 1 montre également la taille (en nm) des cristallites de la phase cérine et la taille (en nm) des cristallites de la phase nickel dans les différents composés lorsqu'elles ont pu être déterminées.

En effet, dans les composés calcinés selon l'art antérieur, lorsque x ≤ 0,3 (faible teneur en nickel), la taille des cristallites de la phase nickel ne peut être obtenue. De même, la taille des cristallites de la phase nickel ne peut être obtenue pour les composés séchés **1, 2** et **3.** En effet, il a été observé que dans ces composés séchés, la phase nickel apparaît lorsque le rapport molaire Ni/Ce est strictement supérieur à 1. Ces observations sont en accord avec les spectres DRX décrits ci-dessus.

Par ailleurs, la taille des cristallites de la phase cérine a pu être déterminée pour tous les composés séchés et calcinés. D'après le tableau 1, la taille moyenne des particules de CeO₂ dans les composés séchés est plus petite comparativement à la taille moyenne des particules de CeO₂ dans les composés calcinés.

Des expériences de diffusion de neutrons (INS) ont également été effectuées sur le composé séché **1** à l'aide du spectromètre IN1 Lagrange de l'Institut Laue Langevin de Grenoble, France (ILL), à 10 K en utilisant un monochromateur de Cu(220) pour les transferts d'énergie entre 200 et 2500 cm⁻¹ et comparées à celles reportées précédemment sur le composé calciné à 500°C CeNi_{1,0}O_{y}, et obtenues à l'aide du spectromètre IN1 de l'Institut Laue Langevin de Grenoble, France (ILL), à 10 K en utilisant un monochromateur de Cu(220) pour les transferts d'énergie entre 200 et 2500 cm⁻¹.

Avant d'effectuer les analyses INS, le solide que l'on veut analyser est placé dans une cellule de l'appareil et subit un traitement *in situ* sous vide à 200°C pendant 2 heures. Ce traitement permet ainsi de s'assurer que l'eau physisorbée présente dans l'air ambiant a été totalement éliminée.

La figure 3 montre l'évolution de l'intensité (en unité arbitraire u.a.) en fonction de l'énergie (en cm⁻¹).

Plus particulièrement, la figure 3 montre l'analyse par diffusion de neutrons du composé séché **1** (figure 3-I) et à titre comparatif l'analyse du composé calciné CeNi_{1,0}O_{y} déjà décrit dans Jalowiecki-Duhamel et al., Int. J. Nuclear Hydrogen Production and Applications, 2009, 2, 2, 148-158 (figure 3-II).

La figure 3-I montre la présence de nombreuses fonctions hydroxyle dans le composé séché **1** caractérisées par les pics à 440 cm⁻¹ et 660 cm⁻¹. La figure 3-II montre également la présence de fonctions hydroxyle dans le composé calciné à 500°C CeNi_{1,0}O_{y} caractérisées par les pics à 250 cm⁻¹, 400 cm⁻¹ et 630 cm⁻¹.

En outre, les formules chimiques des composés séchés **1, 2** et **3** ont été évaluées sur la base de résultats d'analyses élémentaires et sont les suivantes :
- pour le composé **1** : CeMₚNiₓO_{y'}H_{z'} (I'-1) dans laquelle p = 0, x = 1, y' = 5,8 et z' = 3,8.
- pour le composé **2** : CeMₚNiₓO_{y'}H_{z'} (I'-2) dans laquelle p = 0, x = 0,4, y' = 4,0 et z' = 2,4.
- pour le composé **3** : CeMₚNiₓO_{y'}H_{z'} (I'-3) dans laquelle p = 0, x = 0,2, y' = 3,3 et z' = 2,1.

### EXEMPLE 2

### PRODUCTION D'HYDROGENE SELON LE PROCEDE CONFORME A L'INVENTION

### 2.1 Production d'hydrogène selon le procédé conforme à l'invention catalysée par un matériau oxyhydrure M1 dans lequel le rapport molaire Ni/Ce est égal à 1 et le rapport molaire M/Ce est égal à 0 (catalyseur 1)

0,03 g du composé séché **1** obtenu ci-dessus à l'exemple 1.1-a) (matériau solide M2) a été placé dans un réacteur en quartz. Ce matériau a ensuite été traité *in situ* avec de l'hydrogène à 250°C pendant 10 heures pour former le matériau oxyhydrure M1 correspondant (catalyseur **1**).

Un mélange d'eau et d'éthanol a été préparé avec un rapport molaire eau/éthanol de 3/1.

Le mélange résultant a été chauffé et vaporisé dans une chambre de préchauffage dans un flux d'azote de telle sorte qu'environ 15% molaire d'éthanol par rapport au mélange gazeux éthanol/eau/azote ont été utilisés.

Le réacteur contenant le catalyseur **1** a alors été alimenté par un flux gazeux du mélange éthanol/eau/azote à 165°C avec un débit total de gaz de 60 ml/min. Puis de l'oxygène a été introduit dans le réacteur de telle sorte que le mélange gazeux éthanol/eau/oxygène/azote soit de 1/3/1,6/1,3 avec un débit total de gaz de 60 ml/min. La température du four a été maintenue pendant 2-3 minutes après l'introduction de l'oxygène puis diminuée à 50°C.

La température de réaction mesurée était de 320°C au sein du réacteur en grande partie dû à la réactivité entre les ions hydrures et l'oxygène.

La réaction a été stable pendant au moins 50 heures.

Les gaz ont été analysés en ligne à la sortie du réacteur par chromatographie en phase gazeuse (CPG) à l'aide d'un chromatographe couplé à un détecteur à ionisation de flamme (FID) et à un détecteur de conductivité thermique (TCD) et vendu sous la dénomination commerciale Trace GC Ultra par la société Thermo Electron Corporation.

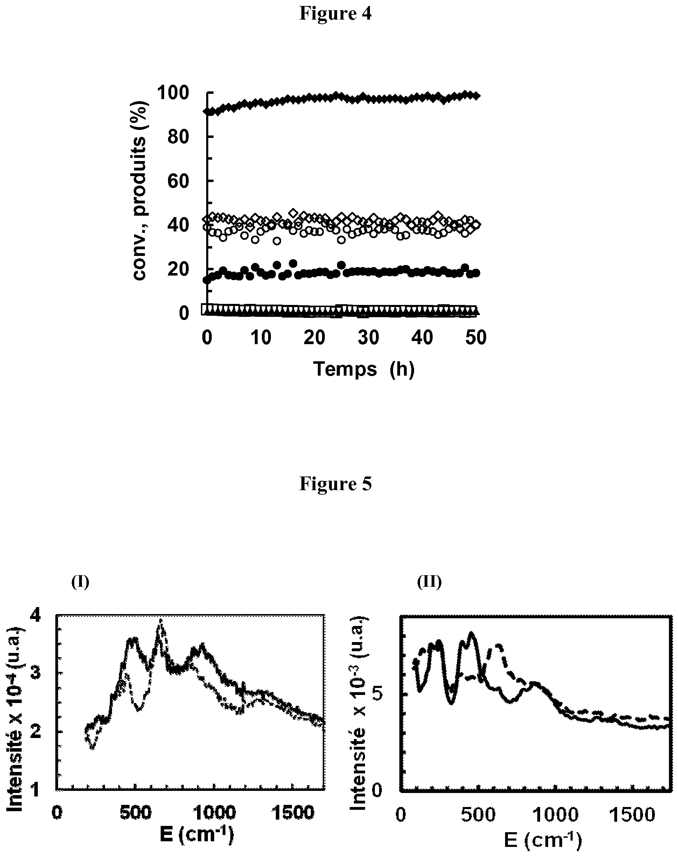

Les données ont été collectées en fonction du temps et sont reportées sur la figure 4 annexée sur laquelle le taux de conversion d'éthanol (en mol %, losanges noirs pleins) et la distribution des différentes espèces gazeuses formées et analysées en ligne (en mol %) sont exprimés en fonction du temps (en h), les losanges vides correspondant à H₂, les cercles vides à CO₂, les ronds noirs pleins à CO, les triangles vides à CH₄ et les carrés vides à l'acétaldéhyde CH₃CHO.

Une conversion totale de l'éthanol et de l'oxygène a été obtenue.

La figure 4 annexée montre que la réaction s'est déroulée de façon stable et que le composé hydrogène est obtenu en forte proportion.

Les produits formés sont gazeux et comprennent 42% molaire de H₂, 38% molaire de CO₂ et 18% molaire de CO.

De très faibles quantités de méthane et d'acétaldéhyde sont présentes (CH₄ + CH₃CHO ≤ 1,6%).

Une formation de carbone extrêmement faible a été observée après 50 heures de réaction (4 mg/gh) comparativement à une valeur de 63 mg/gh reportée dans la publication de Pirez *et al. (ibid)* mettant en oeuvre un oxyhydrure ayant subi une étape de calcination.

### 2.2 Caractérisation du matériau oxyhydrure M1 dans lequel le rapport molaire Ni/Ce est égal à 1 et le rapport molaire M/Ce est égal à 0 (catalyseur 1)

Des expériences de diffusion de neutrons (INS) ont été effectuées sur le catalyseur **1** obtenu selon le procédé de l'invention et à titre comparatif sur le catalyseur oxyhydrure obtenu selon le procédé décrit dans Pirez *et al.* (*ibid*) en utilisant le même appareil que celui décrit précédemment dans l'exemple 1.2.

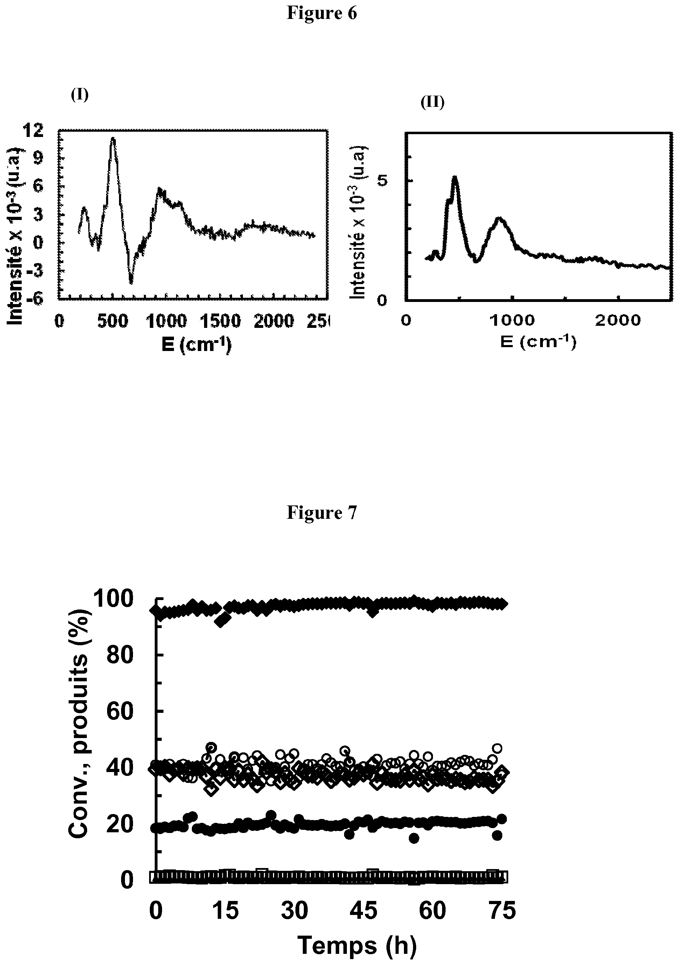

Les figures 5 et 6 montrent l'évolution de l'intensité (en unité arbitraire u.a.) en fonction de l'énergie (en cm⁻¹).

La figure 5-I montre l'analyse par diffusion de neutrons du catalyseur **1,** obtenu après traitement du composé séché **1** en présence d'hydrogène pendant 10 heures à 250°C selon l'étape 1-v) du procédé conforme à l'invention (courbe en trait plein). Trois pics larges sont observés à environ 470 cm⁻¹, 640 cm⁻¹ et 900 cm⁻¹. Le pic à 470 cm⁻¹ est attribuable aux ions hydrures. Lorsque le catalyseur **1** obtenu est traité en présence d'oxygène (courbe en trait pointillé), les pics à 470 cm⁻¹ et à 900 cm⁻¹ diminuent, la réaction étant très exothermique et plusieurs pics larges sont observés dont des pics à 440 cm⁻¹ et à 660 cm⁻¹ indiquant la formation de fonctions hydroxyle lors de l'oxydation.

A titre comparatif, la figure 5-II montre l'analyse par diffusion de neutrons de l'oxyhydrure obtenu après traitement du composé calciné de l'art antérieur CeNi_{1,0}O_{y} en présence d'hydrogène pendant 10 heures à 250°C selon Jalowiecki-Duhamel et al., Int. J. Nuclear Hydrogen Production and Applications, 2009, 2, 2, 148-158 (courbe en trait plein). Lorsque l'oxyhydrure obtenu est traité en présence d'oxygène, le spectre INS est représenté par la courbe en trait pointillé.

En conclusion, les analyses de diffusion de neutrons du catalyseur **1** obtenu selon le procédé de l'invention (figure 5-I) et de l'oxyhydrure obtenu selon le procédé de l'art antérieur comprenant une étape de calcination (figure 5-II) sont différentes.

La figure 6-I montre la différence entre les deux spectres INS de la figure 5-I (courbe en trait plein de la figure 5-I moins courbe en trait pointillé de la figure 5-I). La figure 6-II montre la différence entre les deux spectres INS de la figure 5-II (courbe en trait plein de la figure 5-II moins courbe en trait pointillé de la figure 5-II).

La figure 6 permet ainsi de bien visualiser les ions hydrures insérés lors du traitement en présence d'hydrogène et qui ont ensuite réagi et disparu lors du traitement en présence d'oxygène. Ces ions hydrures sont alors caractérisés par un pic assez fin à 490 cm⁻¹.

### EXEMPLE 3

### PRODUCTION D'HYDROGENE SELON LE PROCEDE CONFORME A L'INVENTION

Dans cet exemple on a réalisé la production d'hydrogène catalysée par un matériau oxyhydrure M1 dans lequel le rapport Ni/Ce est égal à 0,5 et le rapport M/Ce est égal à 0 (catalyseur **2**)

0,03 g du composé séché **2** tel qu'obtenu ci-dessus à l'exemple 1.1-b) a été placé dans un réacteur en quartz. Ce matériau a ensuite été traité *in situ* avec de l'hydrogène à 250°C pendant 10 heures pour former le matériau oxyhydrure M1 correspondant (catalyseur **2**).

Un mélange d'eau et d'éthanol a été préparé avec un rapport molaire eau/éthanol de 3/1.

Le mélange résultant a été chauffé et vaporisé dans une chambre de préchauffage dans un flux d'azote de telle sorte qu'environ 15% molaire d'éthanol par rapport au mélange gazeux éthanol/eau/azote ont été utilisés.

Le réacteur contenant le catalyseur **2** a alors été alimenté par un flux gazeux du mélange éthanol/eau/azote à 160°C avec un débit total de gaz de 60 ml/min. Puis de l'oxygène a été introduit dans le réacteur de telle sorte que le mélange gazeux éthanol/eau/oxygène/azote soit de 1/3/1,6/1,3 avec un débit total de gaz de 60 ml/min. La température du four a été maintenue pendant 2-3 minutes après l'introduction de l'oxygène puis diminuée à 50°C.

La température de réaction mesurée était de 335°C au sein du réacteur en grande partie dû à la réactivité entre les ions hydrures et l'oxygène.

La réaction a été stable pendant au moins 75 heures.

Les gaz sont analysés en ligne à la sortie du réacteur par chromatographie gazeuse comme indiqué ci-dessus à l'exemple 2.

Les données ont été collectées en fonction du temps et sont reportées sur la figure 7 annexée sur laquelle le taux de conversion d'éthanol (en mol %, losanges noirs pleins) et la distribution des différentes espèces gazeuses formées et analysées en ligne (en mol %) sont exprimés en fonction du temps (en h), les losanges vides correspondant à H₂, les cercles vides à CO₂, les ronds noirs pleins à CO, les triangles vides à CH4 et les carrés vides à l'acétaldéhyde CH₃CHO.

Une conversion totale de l'éthanol et de l'oxygène a été obtenue.

La figure 7 annexée montre que la réaction s'est déroulée de façon stable et que le composé hydrogène est obtenu en forte proportion.

Les produits formés sont gazeux et comprennent 37% molaire de H₂, 41% molaire de CO₂ et 20% molaire de CO.

De très faibles quantités de méthane et d'acétaldéhyde sont présentes (CH₄ + CH₃CHO ≤ 1,7%).

Une formation de carbone extrêmement faible a été observée après 75 heures de réaction (1,2 mg/gh) comparativement à une valeur de 63 mg/gh reportée dans la publication de Pirez *et al.* (*ibid*) mettant en oeuvre un oxyhydrure ayant subi une étape de calcination.

### EXEMPLE 4

### PRODUCTION D'HYDROGENE SELON LE PROCEDE CONFORME A L'INVENTION

Dans cet exemple on a réalisé la production d'hydrogène catalysée par un matériau oxyhydrure M1 dans lequel le rapport Ni/Ce est égal à 0,25 et le rapport M/Ce est égal à 0 (catalyseur **3**).

0,03 g du composé séché **3** tel qu'obtenu ci-dessus à l'exemple 1.1-c) a été placé dans un réacteur en quartz. Ce matériau a ensuite été traité *in situ* avec de l'hydrogène à 250°C pendant 10 heures pour former le matériau oxyhydrure M1 correspondant (catalyseur **3**).

Un mélange d'eau et d'éthanol a été préparé avec un rapport molaire eau/éthanol de 3/1.

Le mélange résultant a été chauffé et vaporisé dans une chambre de préchauffage dans un flux d'azote de telle sorte qu'environ 15% molaire d'éthanol par rapport au mélange gazeux éthanol/eau/azote, ont été utilisés.

Le réacteur contenant le catalyseur **3** a alors été alimenté par un flux gazeux du mélange éthanol/eau/azote à 256°C avec un débit total de gaz de 60 ml/min. Puis de l'oxygène a été introduit dans le réacteur de telle sorte que le mélange gazeux éthanol/eau/oxygène/azote soit de 1/3/1,6/1,3 avec un débit total de gaz de 60 ml/min. La température du four a été maintenue pendant 2-3 minutes après l'introduction de l'oxygène puis diminuée à 50°C.

La température de réaction mesurée était de 335°C au sein du réacteur en grande partie dû à la réactivité entre les ions hydrures et l'oxygène.

La réaction a été stable pendant au moins 20 heures.

Les gaz sont analysés en ligne à la sortie du réacteur par chromatographie gazeuse comme indiqué ci-dessus à l'exemple 2.

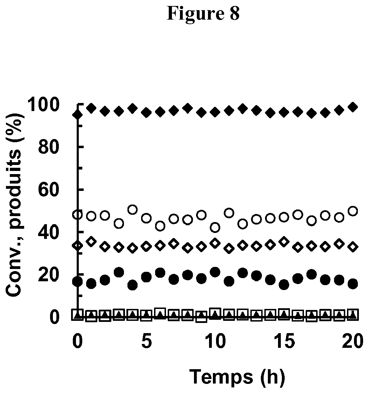

Les données ont été collectées en fonction du temps et sont reportées sur la figure 8 annexée sur laquelle le taux de conversion d'éthanol (en mol %, losanges noirs pleins) et la distribution des différentes espèces gazeuses formées et analysées en ligne (en mol %) sont exprimés en fonction du temps (en h), les losanges vides correspondant à H₂, les cercles vides à CO₂, les ronds noirs pleins à CO, les triangles vides à CH4 et les carrés vides à l'acétaldéhyde CH₃CHO.

Une conversion totale de l'éthanol et de l'oxygène a été obtenue.

La figure 8 annexée montre que la réaction s'est déroulée de façon stable et que le composé hydrogène est obtenu en forte proportion.

Les produits formés sont gazeux et comprennent 34% molaire de H₂, 47% molaire de CO₂ et 18% molaire de CO.

De très faibles quantités de méthane et d'acétaldéhyde sont présentes (CH₄ + CH₃CHO ≤ 1,8%).

Aucune formation de carbone n'a été observée après 20 heures de réaction comparativement à une valeur de 63 mg/gh reportée dans la publication de Pirez *et al.* (*ibid*) mettant en oeuvre un oxyhydrure ayant subi une étape de calcination.

## Revendications

1. Procédé de production d'hydrogène à basse température par transformation d'un alcool ou d'un mélange d'alcools, ledit procédé comprenant les étapes suivantes :
1) une première étape de synthèse d'un matériau oxyhydrure M1 électriquement neutre, à base de cérium, de nickel, d'atomes d'oxygène, d'atomes d'hydrogène et éventuellement d'un métal M choisi parmi Al et Zr, matériau dans lequel :
i) le rapport molaire Ni/Ce varie de 0,1 à 5,
ii) le rapport molaire M/Ce varie de 0 à 1, et
iii) au moins une partie des atomes d'hydrogène présents dans ledit matériau M1 est sous forme d'ions hydrures,
ladite synthèse étant effectuée selon les sous-étapes 1-i) à 1-v) suivantes :
1-i) une première sous-étape de préparation d'une solution aqueuse comprenant au moins un précurseur de cérium, au moins un précurseur de nickel et éventuellement au moins un précurseur de métal M,
1-ii) une deuxième sous-étape de coprécipitation desdits précurseurs de cérium, de nickel et éventuellement de métal M sous forme des hydroxydes de cérium, de nickel et éventuellement de métal M correspondants, par ajout à ladite solution aqueuse, d'au moins un agent de précipitation,
1-iii) une troisième sous-étape de filtration desdits hydroxydes pour obtenir un solide filtré,
1-iv) une quatrième sous-étape de séchage du solide filtré obtenu ci-dessus à la sous-étape 1-iii) à une température comprise entre 40°C et 150°C, pendant une durée comprise entre 1 et 24 heures, pour obtenir un matériau solide M2 électriquement neutre à base de cérium, de nickel, d'atomes d'oxygène, d'atomes d'hydrogène et éventuellement d'un métal M, dans lequel :
i) les définitions du métal M et des rapports molaires Ni/Ce et M/Ce sont les mêmes que celles se rapportant au matériau oxyhydrure M1,
ii) au moins une partie des atomes d'hydrogène présents dans ledit matériau M2 forme avec les atomes d'oxygène des fonctions hydroxyle, et
iii) ledit matériau solide M2 est exempt d'ions hydrures, et
1-v) une cinquième sous-étape de traitement du matériau solide M2 obtenu ci-dessus à l'étape précédente en présence d'hydrogène, pour obtenir un matériau oxyhydrure M1,
2) une seconde étape de mise en contact, à une basse température variant de 20°C à 60°C, du matériau oxyhydrure M1 obtenu ci-dessus à l'étape précédente, dans un premier temps avec un mélange gazeux comprenant au moins un alcool inférieur, de l'eau et de l'azote, puis dans un deuxième temps avec de l'oxygène,
ledit procédé étant **caractérisé en ce que** l'étape de synthèse du matériau oxyhydrure M1 ne comprend pas de sous-étape de calcination consistant en un traitement thermique à une température allant de 300°C à 800°C.

2. Procédé selon la revendication 1, **caractérisé en ce que** le précurseur de cérium est un sel de cérium (III) choisi parmi le nitrate de cérium, l'acétate de cérium et le chlorure de cérium et **en ce que** le précurseur de nickel est un sel de nickel (II) choisi parmi le nitrate de nickel, le chlorure de nickel et le sulfate de nickel.

3. Procédé selon la revendication 1 ou 2, **caractérisé en ce que** la concentration en précurseur de cérium et en précurseur de nickel dans ladite solution aqueuse varie indépendamment de 0,1 à 1 mol/l.

4. Procédé selon l'une quelconque des revendications 1 à 3, **caractérisé en ce que** l'agent de précipitation est choisi parmi la triéthylamine, l'hydroxyde d'ammonium, l'hydroxyde de potassium, l'hydroxyde de sodium et le carbonate de sodium.

5. Procédé selon l'une quelconque des revendications 1 à 4, **caractérisé en ce que** la sous-étape 1-v) de traitement en présence d'hydrogène du matériau solide M2 est réalisée à une température de 50°C à 400°C.

6. Procédé selon l'une quelconque des revendications précédentes, **caractérisé en ce que** le matériau oxyhydrure M1 est choisi parmi ceux dans lesquels le rapport molaire M/Ce est égal à zéro et le rapport molaire Ni/Ce varie de 0,3 à 1.

7. Procédé selon l'une quelconque des revendications précédentes, **caractérisé en ce que** ledit alcool est choisi parmi le méthanol, l'éthanol, le propan-1-ol, le butan-1-ol et le pentan-1-ol et du bio-éthanol.

8. Procédé selon l'une quelconque des revendications précédentes, **caractérisé en ce que** ladite étape de mise en contact 2) est effectuée selon les séquences suivantes :
2-i) l'introduction d'un mélange gazeux eau/alcool/azote dans un réacteur comprenant le matériau oxyhydrure M1 obtenu à l'étape précédente 1), à une température d'au moins 130°C,
2-ii) l'introduction d'oxygène dans le réacteur et le maintien de la température pendant une période d'induction d'au moins 3 minutes, puis
2-iii) la diminution de la température jusqu'à une température inférieure à 60°C.

9. Procédé selon la revendication 8, **caractérisé en ce que** ledit mélange gazeux eau/alcool/azote est introduit dans le réacteur à une température de 160°C lors de la séquence 2-i) et **en ce que** la température est diminuée jusqu'à une température de 50°C lors de l'étape 2-iii).

10. Procédé selon la revendication 8 ou 9, **caractérisé en ce que** ledit mélange gazeux eau/alcool/azote introduit au départ dans le réacteur contient 15% molaire d'alcool par rapport au mélange gazeux eau/alcool/azote.

11. Procédé selon l'une quelconque des revendications précédentes, **caractérisé en ce que** le rapport molaire eau/alcool au sein du mélange gazeux varie de 1/2 à 13/1.

12. Procédé selon l'une quelconque des revendications précédentes, **caractérisé en ce que** le débit du mélange gazeux eau/alcool/azote/oxygène varie de 10 à 100 ml/min.

13. Procédé selon l'une quelconque des revendications précédentes, **caractérisé en ce que** le rapport molaire O₂/alcool varie de 0,5/1 à 2,5/1.

14. Procédé selon l'une quelconque des revendications précédentes, **caractérisé en ce qu'**on utilise un mélange gazeux alcool/eau/O₂/N₂ dans lequel le rapport molaire du mélange alcool/eau/O₂/N₂ est de 1/3/1,6/1,3.

15. Utilisation d'un matériau oxyhydrure M1 obtenu par la mise en oeuvre de l'étape 1) de synthèse du procédé tel que défini à l'une quelconque des revendications 1 à 6, ledit matériau oxyhydrure M1 étant électriquement neutre, à base de cérium, de nickel, d'atomes d'oxygène, d'atomes d'hydrogène et éventuellement d'un métal M choisi parmi Al et Zr, matériau dans lequel :
i) le rapport molaire Ni/Ce varie de 0,1 à 5,
ii) le rapport molaire M/Ce varie de 0 à 1, et
iii) au moins une partie des atomes d'hydrogène présents dans ledit matériau M1 est sous forme d'ions hydrures,
à titre de catalyseur pour la réaction de transformation d'alcools inférieurs en hydrogène à basse température.

## Patentansprüche

1. Verfahren zum Herstellen von Wasserstoff bei niedriger Temperatur durch Umwandeln eines Alkohols oder eines Gemischs von Alkoholen, wobei das Verfahren die folgenden Schritte aufweist:
1) einen ersten Schritt der Synthese eines elektrisch neutralen Oxyhydrid-Materials M1 auf Basis von Cer, Nickel, Sauerstoffatomen, Wasserstoffatomen und optional einem Metall M, das aus Al und Zr ausgewählt ist, wobei bei dem Material:
i) das Molverhältnis Ni/Ce von 0,1 bis 5 variiert,
ii) das Molverhältnis M/Ce von 0 bis 1 variiert, und
iii) mindestens ein Teil der Wasserstoffatome, die sich in dem Material M1 befinden, in Form von Hydridionen vorliegt,
wobei die Synthese gemäß den folgenden Teilschritten 1-i) bis 1-v) durchgeführt wird:
1-i) einem ersten Teilschritt des Herstellens einer wässrigen Lösung, die mindestens einen Cer-Präkursor, mindestens einen Nickel-Präkursor und optional mindestens einen Metall- M -Präkursor aufweist,
1-ii) einem zweiten Teilschritt der Kopräzipitation der Cer-, Nickel- und optional Metall- M -Präkursoren in Form der jeweiligen Cer-, Nickel- und optional Metall- M - Hydroxide durch Hinzufügen mindestens eines Präzipitationsmittels zu der wässrigen Lösung,
1-iii) einem dritten Teilschritt der Filtration der Hydroxide, um einen gefilterten Feststoff zu erhalten,
1-iv) einem vierten Teilschritt des Trocknens des oben in Teilschritt 1-iii) erhaltenen gefilterten Feststoffes bei einer Temperatur von zwischen 40°C und 150°C während einer Dauer von zwischen 1 und 24 Stunden, um einen elektrisch neutralen Feststoff M2 auf Basis von Cer, Nickel, Sauerstoffatomen, Wasserstoffatomen und optional einem Metall M zu erhalten, wobei:
i) die Definitionen des Metalls M und die Molverhältnisse Ni/Ce und M/Ce die gleichen wie diejenigen sind, die sich auf das Oxyhydrid-Material M1 beziehen,
ii) mindestens ein Teil der Wasserstoffatome, die sich in dem Material M2 befinden, mit den Sauerstoffatomen Hydroxyfunktionen bildet, und
iii) der Feststoff M2 frei von Hydridionen ist, und
1-v) einem fünften Teilschritt des Behandelns des oben im vorhergehenden Schritt erhaltenen Feststoffes M2 in Anwesenheit von Wasserstoff, um ein Oxyhydrid-Material M1 zu erhalten,
2) einen zweiten Schritt des Kontaktierens bei einer niedrigen Temperatur, die von 20°C bis 60°C variiert, des Oxyhydrid-Materials M1, das oben im vorangehenden Schritt erhalten wurde, während einer ersten Zeit mit einem Gasgemisch, das mindestens einen niederen Alkohol, Wasser und Stickstoff aufweist, dann während einer zweiten Zeit mit Sauerstoff,
wobei das Verfahren **dadurch gekennzeichnet ist, dass** der Schritt der Synthese des Oxyhydrid-Materials M1 keinen Teilschritt des Kalzinierens aufweist, der aus einer Wärmebehandlung bei einer Temperatur von 300°C bis 800°C besteht.

2. Verfahren gemäß Anspruch 1, **dadurch gekennzeichnet, dass** der Cer-Präkursor ein Cer(III)salz ist, das aus Cernitrat, Ceracetat und Cerchlorid ausgewählt ist, und dass der Nickel-Präkursor ein Nickel(II)salz ist, das aus Nickelnitrat, Nickelchlorid und Nickelsulfat ausgewählt ist.

3. Verfahren gemäß Anspruch 1 oder 2, **dadurch gekennzeichnet, dass** die Konzentration von Cer-Präkursor und von Nickel-Präkursor in der wässrigen Lösung unabhängig von 0,1 bis 1 Mol/l variiert.

4. Verfahren gemäß irgendeinem der Ansprüche 1 bis 3, **dadurch gekennzeichnet, dass** das Präzipitationsmittel aus Triethylamin, Ammoniumhydroxid, Kaliumhydroxid, Natriumhydroxid und Natriumcarbonat ausgewählt ist.

5. Verfahren gemäß irgendeinem der Ansprüche 1 bis 4, **dadurch gekennzeichnet, dass** der Teilschritt 1-v) des Behandelns des Feststoffes M2 in Anwesenheit von Wasserstoff bei einer Temperatur von 50°C bis 400°C erfolgt.

6. Verfahren gemäß irgendeinem der vorhergehenden Ansprüche, **dadurch gekennzeichnet, dass** das Oxyhydrid-Material M1 aus denjenigen ausgewählt ist, bei denen das Molverhältnis M/Ce gleich Null ist und das Molverhältnis Ni/Ce von 0,3 bis 1 variiert.

7. Verfahren gemäß irgendeinem der vorhergehenden Ansprüche, **dadurch gekennzeichnet, dass** der Alkohol aus Methanol, Ethanol, Propan-1-ol, Butan-1-ol und Pentan-1-ol und Bio-Ethanol ausgewählt ist.

8. Verfahren gemäß irgendeinem der vorhergehenden Ansprüche, **dadurch gekennzeichnet, dass** der Schritt des Kontaktierens 2) gemäß den folgenden Abläufen erfolgt:
2-i) Einleiten eines Wasser-/Alkohol-/Stickstoff-Gasgemischs in einen Reaktor, der das Oxyhydrid-Material M1 aufweist, das im vorangehenden Schritt 1) erhalten wurde, bei einer Temperatur von mindestens 130°C,
2-ii) Einleiten von Sauerstoff in den Reaktor und Aufrechterhalten der Temperatur während einer Induktionsperiode von mindestens 3 Minuten, anschließend
2-iii) Absenken der Temperatur auf eine Temperatur von kleiner als 60°C.

9. Verfahren gemäß Anspruch 8, **dadurch gekennzeichnet, dass** das Wasser-/Alkohol-/Stickstoff- Gasgemisch während der Abfolge 2-i) bei einer Temperatur von 160°C in den Reaktor eingeleitet wird, und dass die Temperatur während des Schrittes 2-iii) bis auf eine Temperatur von 50°C abgesenkt wird.

10. Verfahren gemäß Anspruch 8 oder 9, **dadurch gekennzeichnet, dass** das Wasser-/Alkohol-/Stickstoff-Gasgemisch, das anfangs in den Reaktor eingeleitet wird, 15 Mol-% Alkohol im Vergleich zu dem Wasser-/Alkohol-/Stickstoff -Gasgemisch enthält.

11. Verfahren gemäß irgendeinem der vorhergehenden Ansprüche, **dadurch gekennzeichnet, dass** das Molverhältnis Wasser/Alkohol innerhalb des Gasgemischs von 1/2 bis 13/1 variiert.

12. Verfahren gemäß irgendeinem der vorhergehenden Ansprüche, **dadurch gekennzeichnet, dass** der Durchsatz des Wasser-/Alkohol-/Stickstoff-/Sauerstoff- Gasgemischs von 10 bis 100 ml/min variiert.

13. Verfahren gemäß irgendeinem der vorhergehenden Ansprüche, **dadurch gekennzeichnet, dass** das Molverhältnis O₂/Alkohol von 0,5/1 bis 2,5/1 variiert.

14. Verfahren gemäß irgendeinem der vorhergehenden Ansprüche, **dadurch gekennzeichnet, dass** ein Alkohol-/Wasser-/O₂-/N₂- Gasgemisch verwendet wird, bei dem das Molverhältnis des Alkohol-/Wässei-/O₂-/N₂-Gemischs 1/3/1,6/1,3 beträgt.

15. Verwendung eines Oxyhydrid-Materials M1, das durch das Durchführen des Schrittes 1) der Synthese des in irgendeinem der Ansprüche 1 bis 6 definierten Verfahrens erhalten wird, wobei das Oxyhydrid-Material M1 elektrisch neutral, auf Basis von Cer, Nickel, Sauerstoffatomen, Wasserstoffatomen und optional einem Metall M ist, das aus Al und Zr ausgewählt ist, wobei bei dem Material:
i) das Molverhältnis Ni/Ce von 0,1 bis 5 variiert,
ii) das Molverhältnis M/Ce von 0 bis 1 variiert, und
iii) mindestens ein Teil der Wasserstoffatome, die sich in dem Material M1 befinden, in Form von Hydridionen vorliegt,
als Katalysator für die Umwandlungsreaktion von niederen Alkoholen in Wasserstoff bei niedriger Temperatur.

## Claims

1. Process for production of hydrogen at low temperature by transformation of an alcohol or of a mixture of alcohols, said process comprising the following steps:
1) a first step of synthesis of an electrically neutral oxyhydride material M1, based on cerium, nickel, oxygen atoms, hydrogen atoms and optionally a metal M selected from Al and Zr, and in said material:
i) the Ni/Ce molar ratio varies from 0.1 to 5,
ii) the M/Ce molar ratio varies from 0 to 1, and
iii) at least a proportion of the hydrogen atoms present in said material M1 is in the form of hydride ions,
said synthesis being carried out according to the following substeps 1-i) to 1-v):
1-i) a first substep of preparation of an aqueous solution comprising at least one cerium precursor, at least one nickel precursor and optionally at least one precursor of metal M,
1-ii) a second substep of coprecipitation of said precursors of cerium, of nickel and optionally of metal M in the form of the corresponding hydroxides of cerium, of nickel and optionally of metal M, by adding at least one precipitant to said aqueous solution,
1-iii) a third substep of filtration of said hydroxides to obtain a filtered solid,
1-iv) a fourth substep of drying the filtered solid obtained above in substep 1-iii) at a temperature between 40°C and 150°C, for a time between 1 and 24 hours, to obtain an electrically neutral solid material M2 based on cerium, nickel, oxygen atoms, hydrogen atoms and optionally a metal M, in which:
i) the definitions of metal M and the Ni/Ce and M/Ce molar ratios are the same as those relating to the oxyhydride material M1,
ii) at least a proportion of the hydrogen atoms present in said material M2 forms hydroxyl functions with the oxygen atoms, and
iii) said solid material M2 is free from hydride ions, and
1-v) a fifth substep of treatment of the solid material M2 obtained above in the preceding step in the presence of hydrogen, to obtain an oxyhydride material M1,
2) a second step of contacting, at low temperature, the oxyhydride material M1 obtained above in the preceding step, firstly with a gas mixture comprising at least one lower alcohol, water and nitrogen, then secondly with oxygen,
said process being **characterized in that** the step of synthesis of the oxyhydride material M1 does not comprise a substep of calcination consisting of a thermal treatment at a temperature of from 300°C to 800°C.

2. Process according to Claim 1, **characterized in that** the cerium precursor is a cerium(III) salt selected from cerium nitrate, cerium acetate and cerium chloride and **in that** the nickel precursor is a nickel(II) salt selected from nickel nitrate, nickel chloride and nickel sulphate.

3. Process according to Claim 1 or 2, **characterized in that** the concentration of cerium precursor and of nickel precursor in said aqueous solution varies independently from 0.1 to 1 mol/l.

4. Process according to any one of Claims 1 to 3, **characterized in that** the precipitant is selected from triethylamine, ammonium hydroxide, potassium hydroxide, sodium hydroxide and sodium carbonate.

5. Process according to any one of Claims 1 to 4, **characterized in that** the substep 1-v) of treatment of the solid material M2 in the presence of hydrogen is carried out at a temperature from 50°C to 400°C.

6. Process according to any one of the preceding claims, **characterized in that** the oxyhydride material M1 is selected from those in which the M/Ce molar ratio is equal to zero and the Ni/Ce molar ratio varies from 0.3 to 1.

7. Process according to any one of the preceding claims, **characterized in that** said alcohol is selected from methanol, ethanol, propan-1-ol, butan-1-ol and pentan-1-ol and bio-ethanol.

8. Process according to any one of the preceding claims, **characterized in that** said contacting step 2) is carried out according to the following sequences:
2-i) introducing a water/alcohol/nitrogen gas mixture into a reactor comprising oxyhydride material M1 obtained in the preceding step 1), at a temperature of at least 130°C,
2-ii) introducing oxygen into the reactor and maintaining the temperature for an induction period of at least 3 minutes, then
2-iii) lowering the temperature to a temperature below 60°C.

9. Process according to Claim 8, **characterized in that** said water/alcohol/nitrogen gas mixture is fed into the reactor at a temperature of 160°C during sequence 2-i) and **in that** the temperature is lowered to a temperature of 50°C during step 2-iii).

10. Process according to Claim 8 or 9, **characterized in that** said water/alcohol/nitrogen gas mixture fed into the reactor at the start contains 15 mol% of alcohol relative to the water/alcohol/nitrogen gas mixture.

11. Process according to any one of the preceding claims, **characterized in that** the water/alcohol molar ratio in the gas mixture varies from 1/2 to 13/1.

12. Process according to any one of the preceding claims, **characterized in that** the flow rate of the water/alcohol/nitrogen/oxygen gas mixture varies from 10 to 100 ml/min.

13. Process according to any one of the preceding claims, **characterized in that** the O₂/alcohol molar ratio varies from 0.5/1 to 2.5/1.

14. Process according to any one of the preceding claims, **characterized in that** an alcohol/water/O₂/N₂ gas mixture is used in which the molar proportions of the alcohol/water/O₂/N₂ mixture are 1/3/1.6/1.3.

15. Use of an oxyhydride material M1 obtained by carrying out step 1) of synthesis of the process as defined in any one of Claims 1 to 6, said oxyhydride material M1 being electrically neutral, based on cerium, nickel, oxygen atoms, hydrogen atoms and optionally a metal M selected from Al and Zr, and in said material:
i) the Ni/Ce molar ratio varies from 0.1 to 5,
ii) the M/Ce molar ratio varies from 0 to 1, and
iii) at least a proportion of the hydrogen atoms present in said material M1 is in the form of hydride ions,
as catalyst for the reaction of transformation of lower alcohols to hydrogen at low temperature.
